# EUROPEAN PATENT APPLICATION

(11) **EP 2 157 423 A1**
(43) Date of publication of application: **24.02.2010**
(21) Application number: 07765825.0
(22) Date of filing: 16.04.2007
(51) Int. Cl.: G01N 21/88, G01N 21/89

(54) **SYSTEM OF DETECTION OF FAULTS IN SURFACES BY MERGING OF IMAGES BY MEANS OF LIGHT SWEEPING**

(71) Applicant: Tornero Montserrat, Josep Maria, Camino de Vera, s/n 46022 Valencia (ES)
(72) Inventor: MORA AGUILAR, Marta Covadonga, E-46022 Valencia (ES); HERRAEZ MARTINEZ, Alvaro, E-46022 Valencia (ES); MONTES SANCHEZ, Nicolás, E-46022 Valencia (ES)
(74) Representative: Chanza Jordan, Dionisio
(86) International application number: PCT/ES2007/000236
(87) International publication number: WO 2008/125702

(57) **Abstract**

System of detection of faults in surfaces by merging of images by means of light sweeping by means of a zone of inspection by viewing cameras where the inspected object is swept by an illumination of planar beams in movement which amplify the size of the faults in the captured images. All of the images of a predetermined part of the object captured by the corresponding camera are merged in a single image for subsequent processing thereof.

## Description

### Technical field

The invention that is protected in this patent, consists of a system of detection of faults in surfaces for images merger with amplifying of faults obtained by means of light sweeping.

It is a question, therefore, of a system of quality control that detects superficial faults even of small size superior to 0,2 millimeters in diameter and that they can end in not overcoming of the quality controls of productive processes, nor achieve the satisfaction in the final consumer. The surfaces can be the correspondents to small objects or big objects as there are household appliances or motorcars bodyworks. In this sense, the system has been tested on bodywork of motor vehicles.

### Background Art

This way, is already known the Japanese patent JP63061374 of MOTIVE MAZDA (1988) that describes a method of discrimination of the type of defect according to the shade generated by means of change of the lighting along the surface with a fixed system of lighting, in contrast to the present invention in which the lighting is mobile. In the present invention, with a fixed vehicle and a system of sweep of mobile lighting it is achieved to locate the minimal faults. With the previous Japanese patent, the movement of the vehicle generates vibrations that make the faults undetectable. Other patents as the W02006/054962 of MOTIVE TOYOTA MANUFACTURING (2006) it tries to detect the same faults for thermal changes, in contrast with the invention that is described by means of artificial vision.

The North American patent US5844801 of SLING GIVEN KOGYO KABUSHIKI KAISHA (1998), where the faults detection for bodyworks is carried out in the surfaces before doing, looks for possible distortions. This invention only detects problems of dents, scratches and assembly faults previously to his doing, and not micro-faults neither in nor metallic surfaces either in identical surfaces.

In the North American patent US639870 of CHUO ELECTRONIC MEASUREMENT (2002), the examination of the faults is realized by the vehicle in movement with the problems of distortions that this causes and that have been already described previously. Also, this patent focus on the process of marked with the defect and not so much on the process of detection of the same one, without alluding to the system of lighting (disposition and lights movement) essentially for the faults detection. Also, the W02005100960 of CHUO ELECTRONIC MEASUREMENT (2005) treats a plurality of elements of emission of light with a simultaneous movement of lights and cameras. This relative movement, camera to bodywork or vice versa, produces an important sufficient distortion as not to be able to detect micro-faults.

The North American patent US6532066 of GLOBAL FORD TECHNOLOGIES (2003), which uses artificial vision, tries to include all the systems of lighting known up to the date, alluding to the possibility of using punctual, directional, structured and diffuse lighting; it even calls into question the possibility of using laser with a system that is not a camera. Nevertheless, this patent shows the difficulty in his use on dry surfaces, centring only on polymer surfaces newly identical. The same applicant with their North American patent US20030139836 (2003) patents in a generic and vague way the general concept of detection of faults and repair of the same ones with robots. It does not specify any method of detection of faults, not of location of the same ones, not either of repair. Only he deal about the philosophy of the flow and accused of information of devices, and claims in an exclusive way any system of acquisition of information, prosecution and control. Also, it refers to the need to have a model CAD to inspect the object, in contrast to the invention that here is described.

All of them as backgrounds to the invention that appears, that are based on applications, uses or very diverse functions and like inventions all from whom there turn out to be functional and operative limitations, and therefore removed with regard to the device of the invention.

### Technical problem

In the production processes superficial faults or micro-faults are generated on the products by imprecision in the proper production process, lacking in homogeneity in the materials, environmental pollution, etc. In particular in the painted surfaces the environmental contamination acquires a major relevancy, at the time that it amplifies already existing faults in the surfaces before doing. Consequently, the faults detection earlier, during and after the painting process it is vital to support a few acceptable quality levels. There do not exist automatic systems of detection of micro-faults, they resorting to the ocular manual and visual examination on the part of workers. Being this a rudimentary, slow and not systematic process that does not allow to guarantee quality levels of the final products, at the time that it affects to the health of the workers.

### Technical solution

Therefore, it turns out to be necessary to develop an automated system of detection of micro-faults capable of guaranteeing of systematic form a few levels of quality acceptable, capable of being introduced in productive processes so that he does not interfere in the production line with faults detection in real-time, which implies an acquisition and prosecution of information at high speed in surfaces. The detection, recording and systematic location of the faults allows us to automate the subsequent correction of the faults by means of a robotic system or another similar mechanism.

The system of detection that we exhibit is based on the generation of a sweep of lighting on the surface to be detected keeping fixed the position of the object and of the system of acquisition of the image by means of artificial vision. The fixed relative position between object to be inspected and the cameras of acquisition of images eliminates the distortions for vibrations associated with the relative movement between these, which blurs the defect and they would make it undetectable. On the contrary, the vibrations associated with the mobile lighting it does not affect to the acquired images.

The lighting consists of a set of narrow and planar bundles of light (p.ej. Fluorescent lighting to high frequency) capable of heightening the defect for an optical amplification phenomenon in the proximities of the rim of the lighting, that is to say, in the light transfer to shade and from shade to light. In these transfer, the size of the proper defect acquires the border of the bundle about the defect a curvature with a diameter of up to ten times. It is this phenomenon what it qualifies to the system to detect micro-faults with a limited number of cameras.

In turn, the prosecution is realized on the fused image of all the captured images, and not on each of them, as they do other systems and procedures. The images merger is realized in the proper system of acquisition of images by a simple superposition of the same ones with a consumption of not significant time.

### Advantageous effects

The system of detection of faults is of high sensibility as a result of the described optical amplification of the same ones previously. Also it is a system of high precision to the verse affected by the vibrations associated with the movements, since the cameras and object are fixed, that is to say without relative movement. It is a system of high speed since instead of processing each and everyone of the acquired images, it processes only a fused image of all of them.

Therefore, it is a services system in real-time capable of being inserted in the production line adapting itself at the speed of work of the same one without interfering with the productive process.

### Best mode

The detection system can be located along the chain of manufacture in all those points in which possible superficial faults want to be detected. Namely after the shaped one of the surface, after his priming, after his lacquer, etc. The location will depend exclusively on the importance and importance of the detection and facility of correction of the above mentioned defect in this point of the chain of manufacture.

First of all, the object is moved to the examination area being located in a point under the observation of a set of cameras. Next a lighting system generates a variable number of planar bundles that cover the surface illuminating all those parts of the same one capable of examination.

This planar bundles sweep maximizes the micro-faults in the captured image and makes them detectable by means of a later prosecution. Since we have expressed previously, this lighting heightens the defect for an amplification mechanism in the proximities of the rim of the bundle planar, that is to say, in the light transfer to shade and from shade to light. This phenomenon capable of amplifying up to a value of ten times the size of the fault, is what it qualifies to the system to detect micro-faults with a limited number of cameras.

During this process, each of the units of acquisition captures and fuses the images corresponding to his visual field. After the process of acquisition of the images, the object, to inspect, remains free to leave the examination area they proceeding simultaneously to the prosecution of each of the images resultant from the merger and associated with each of the units.

Next the detected faults are classified by his size, form, etc. being located on the object, facing his future correction inside the chain of manufacture. It is this detection and precise location the one that allows us to automate the subsequent process of correction of faults by means of robotic systems or similar mechanisms.

## Claims

1. - System of detection of faults in surfaces by merging of images with amplified faults by means of light sweeping **caractherized by** a zone of inspection by viewing cameras where the inspected object is swept by an illumination of planar beams in movement which amplify the size of the faults in the captured images. All of the images of a determined part of the object captured by the corresponding camera are merged in a single image for subsequent processing thereof.
